# EUROPÄISCHE PATENTSCHRIFT

(11) **EP 1 536 596 B1**
(45) Veröffentlichungstag und Bekanntmachung des Hinweises auf die Patenterteilung: **04.07.2007**
(21) Anmeldenummer: 03027510.1
(22) Anmeldetag: 28.11.2003
(51) Int. Cl.: H04L 12/413, B60R 16/02, G06F 13/40, H04L 12/24

(54) **Treibermodul und Verfahren zur Konfiguration eines Treibermoduls**
Driver module and method for configuring a driver module
Module de gestion et procédé pour configurer un module de gestion

(43) Veröffentlichungstag der Anmeldung: 01.06.2005
(73) Patentinhaber: Delphi Technologies, Inc., Troy, MI 48007 (US)
(72) Erfinder: Giesen, Marko, 51588 Nümbrecht (DE); Trommer, Frank, O., 51588 Nümbrecht (DE); Lehmann, Klaus, 53797 Lohmar (DE); Stadler, Peter, 57482 Wenden (DE); Schulte, Thomas, 58540 Meinerzhagen Windebruch (DE); Heinrich, Markus, 51588 Nümbrecht (DE)
(74) Vertreter: Manitz, Finsterwald & Partner GbR

(56) Entgegenhaltungen:
- EP-A- 0 791 506
- DE-A- 10 203 341
- US-B1- 6 249 060
- US-B1- 6 356 826

## Beschreibung

Die vorliegende Erfindung betrifft ein Treibermodul für eine Kraftfahrzeugelektrik und ein Verfahren zur Konfiguration eines solchen Treibermoduls.

Kraftfahrzeugelektriken weisen eine Reihe von Verbrauchern bzw. Lasten auf, die auf entsprechende Schaltsignale hin ein- bzw. auszuschalten sind. Hierzu können Treibermodule mit wenigstens einem Treiber dienen, der einen elektrischen bzw. elektronischen Lastschalter aufweist, der auf ein entsprechendes Schaltsignal hin einen den jeweiligen Verbraucher bzw. die jeweilige Last enthaltenden Laststromkreis öffnet oder schließt und damit den Verbraucher bzw. die Last ein- bzw. ausschaltet.

Von Sensoren oder Verbrauchern werden teilweise auch Signale abgegeben, die entsprechenden Vorrichtungen zuzuführen sind. Im Rahmen der vorliegenden Erfindung werden unter Treibern daher auch Einrichtungen verstanden, die alternativ oder zusätzlich dazu dienen, Signale oder Daten von elektrischen Einrichtungen der Kraftfahrzeugelektrik an andere Einrichtungen, beispielsweise eine zentrale Steuerung, zu übertragen. Dabei kann es sich beispielsweise um Diagnoseeinrichtungen von Verbrauchern oder auch um Sensoren handeln.

Bislang ist für jeweils eine vorgegebene elektrische Einrichtung einer Kraftfahrzeugelektrik ein spezieller Treiber vorgesehen, um diese anzusteuern bzw. deren Signale zu verarbeiten. Um eine Verbindung zwischen dem Treiber und der entsprechenden elektrischen Einrichtung herzustellen, werden Codierungen verwendet, um verschiedene Leitungen eines Kabelbaums einer elektrischen Einrichtung und einem bestimmten Treiber zuzuordnen. So können beispielsweise farbcodierte Leitungen verwendet werden. Wird ein Treibermodul mit mehreren Treibern verwendet, so werden, um Verpolungen und damit eine Vertauschung von für die elektrischen Einrichtungen spezifischen Treibern zu vermeiden, Steckverbinder mit einer Codierung in Form von Führungen oder mechanischen Sperrelementen verwendet, die die Herstellung einer Steckverbindung in nur einer korrekten Relativposition der Kontaktelemente des jeweiligen Steckverbinders an einem Kabelbaum zu denen des Treibermoduls sicherstellen.

In Abhängigkeit von der elektrischen Einrichtung und insbesondere deren Laststrom werden dabei Kabel mit verschiedenen Kabelquerschnitten verwendet.

Alle diese Maßnahmen führen zu einer großen Anzahl von Treibermodulen bzw. Treibern, Kabelbäumen und Steckverbindern, die eine kostengünstige Herstellung und eine einfache, aber fehlerfreie Montage erschweren.

Aus der EP-791 506-A ist eine Kraftfahrzeugelektrik mit einem Treibermodul und an den Ein- und Ausgängen dieses Treibermoduls angeschlossenen elektrischen Einrichtungen bekannt. Das Treibermodul umfasst einen Prozessor, der die angeschlossenen elektrischen Einrichtungen steuert.

Aus der DE-102 03 341-A ist ein Verfahren zur Konfiguration einer Kraftfahrzeugelektrik mit einer Steuereinrichtung für mindestens zwei angeschlossene elektrische Einrichtungen bekannt, bei den vorgegebene elektrische Testsignale angelegt werden, Antwortsignale erfasst werden, die die Antworten der elektrischen Einrichtungen auf die jeweiligen Testsignale wiedergeben, zur Ermittlung von vorgegebenen Typen der angeschlossenen elektrischen Einrichtungen aus den Antwortsignalen ermittelte Daten mit entsprechenden vorgegebenen Referenzdaten für mögliche vorgegebene Typen von elektrischen Einrichtungen verglichen werden, und bei dem in Abhängigkeit von den Vergleichsergebnissen den ermittelten Typen entsprechende Parameter für die angeschlossenen elektrischen Einrichtungen gesetzt werden.

Die US-6,356,826-B offenbart ein intelligentes Stromverteilersystem für Fahrzeuge und ein Verfahren zum Herstellen des Systems. Bei dem System wird der Strom über intelligente Verbindungsanschlüsse an die Lasten verteilt, wobei die Anschlüsse an gewünschten Stellen an einem Kabel montiert sind, dessen Nachrichtenkommunikationsbus dazu verwendet wird, Steuerbefehle an elektronische Steuerungen zu übermitteln, die den Betrieb des Anschlusses steuern.

Der vorliegenden Erfindung liegt die Aufgabe zugrunde, die Montage einer Kfz-Elektrik und insbesondere den Anschluss von elektrischen Einrichtungen an diese auf einfache, aber zuverlässige Weise zu ermöglichen.

Die Aufgabe wird gelöst durch ein Verfahren zur Konfiguration eines konfigurierbaren Treibermoduls mit den Merkmalen des Anspruchs 1.

Bei dem erfindungsgemäßen Verfahren zur Konfiguration eines konfigurierbaren Treibermoduls, das wenigstens zwei mit Ein- und/oder Ausgängen des Treibermoduls verbundene Treiber für elektrische Einrichtungen umfasst, in Bezug auf wenigstens zwei an das Treibermodul über die Ein-und/oder Ausgänge angeschlossene elektrische Einrichtungen, werden an die Ein- bzw. Ausgänge vorgegebene elektrische Testsignale angelegt, Antwortsignale erfasst, die die Antworten der elektrischen Einrichtungen auf die jeweiligen Testsignale wiedergeben, zur Ermittlung von vorgegebenen Typen der angeschlossenen elektrischen Einrichtungen aus den Antwortsignalen ermittelte Daten mit entsprechenden vorgegebenen Referenzdaten für mögliche vorgegebene Typen von elektrischen Einrichtungen, für die das Treibermodul vorgesehen ist, verglichen, und in Abhängigkeit von den Vergleichsergebnissen den ermittelten Typen entsprechende Parameter für das Treibermodul und/oder die mit den Ein- bzw. Ausgängen verbundenen Treiber und/oder die daran angeschlossenen elektrischen Einrichtungen gesetzt.

Die Aufgabe wird weiterhin gelöst durch ein konfigurierbares Treibermodul mit den Merkmalen des Anspruchs 13.

Das erfindungsgemäße konfigurierbare Treibermodul umfasst wenigstens zwei Treiber für elektrische Einrichtungen, wobei die Treiber jeweils mit Ein- und/oder Ausgängen des Treibermoduls verbunden sind, eine Speichereinrichtung, in der Referenzdaten zur Identifikation von vorgegebenen Typen von elektrischen Einrichtungen gespeichert sind, eine Konfigurationseinrichtung, mittels derer wenigstens eine Testsignalabgabeeinrichtung oder die Treiber zur Abgabe von Testsignalen an die Ein- und/oder Ausgänge ansteuerbar sind, und wenigstens eine Erfassungseinrichtung zur Erfassung von Antwortsignalen, die die Antworten der elektrischen Einrichtungen auf die jeweiligen Testsignale wiedergeben, wobei die Konfigurationseinrichtung weiter dazu ausgebildet ist, erfasste Werte oder die zeitlichen Verläufe der Antwortsignale mit entsprechenden vorgegebenen Referenzdaten für mögliche Typen von an das Treibermodul anschließbaren elektrischen Einrichtungen zu vergleichen, und in Abhängigkeit von den Vergleichsergebnissen den ermittelten Typen entsprechende Parameter für das Treibermodul und/oder die mit den Ein- bzw. Ausgängen verbundene Treiber und/oder die daran angeschlossenen elektrischen Einrichtungen zu setzen.

Erfindungsgemäß wird also in einer Kfz-Elektrik ein Treibermodul verwendet mit Treibern verwendet. Wie bereits einleitend erwähnt, werden hierbei unter Treibern allgemein jegliche Einrichtungen verstanden, die zum Betreiben elektrischer Einrichtungen bzw. Geräte, insbesondere solcher einer Kraftfahrzeugelektrik dienen können. Bei den elektrischen Einrichtungen kann es sich beispielsweise um Sensoren oder Verbraucher bzw. Lasten, wie beispielsweise elektrische Motoren oder Lampen, handeln. Insbesondere in den beiden letzten Fällen können die Treiber insbesondere zum Ein- und Ausschalten der Verbraucher bzw. Lasten auf ihnen zugeführte Schaltsignale hin ausgelegt sein.

Das Treibermodul ist konfigurierbar. Das heißt, dass es beispielsweise durch Setzen von Parametern an seine Verwendung angepaßt werden kann. Insbesondere kann es beispielsweise in seinen Eigenschaften an die daran angeschlossenen elektrischen Einrichtungen anpassbar sein, so dass diese entsprechend ihren Spezifikationen von den Treibern des Treibermoduls angesteuert werden können. Die Konfiguration kann sich dabei nur auf das Treibermodul beziehen, wobei die Treiber selbst nicht konfigurierbar sind, sondern nur deren Verbindungen zu Ein- und Ausgängen bzw. Signalkanälen. Vorzugsweise sind jedoch auch die in dem Treibermodul vorgesehenen Treiber selbst konfigurierbar.

Die Konfigurationsparameter können dabei beispielsweise maximale Strom- oder Spannungswerte für Lastschalter des jeweiligen Treibers, die durch die an diesen angeschlossene elektrische Einrichtung gegeben sind, oder auch die Zuordnung der Treiber zu Ein- oder Ausgängen betreffen.

Es wird davon ausgegangen, dass das Treibermodul zur Verwendung mit elektrischen Einrichtungen vorgesehen ist, die in vorgegebene Typen einteilbar sind, die bei der Konfiguration erkannt werden.

Um eine automatische Konfigurierung des Treibermoduls in Abhängigkeit von den daran angeschlossenen elektrischen Einrichtungen durchzuführen, ist es zunächst vorgesehen, dass an die Ein- bzw. Ausgänge, an die die elektrischen Einrichtungen angeschlossen sind, vorgegebene elektrische Testsignale angelegt werden. Da die normalen Ein- oder Ausgänge verwendet werden, sind also erfindungsgemäß keine zusätzlichen Verbindungen zwischen den elektrischen Einrichtungen und dem Treibermodul notwendig, um eine automatische Konfiguration zu ermöglichen. Das erfindungsgemäße Treibermodul verfügt hierzu über die Konfigurationseinrichtung, mittels derer wenigstens eine Testsignalabgabeeinrichtung oder die Treiber zur Abgabe von Testsignalen an die Ein- oder Ausgänge ansteuerbar sind. Die Testsignale können dabei grundsätzlich parallel oder auch in vorgegebener zeitlicher Folge abgegeben werden.

Es werden dann Antwortsignale erfasst, die die Antworten der angeschlossenen elektrischen Einrichtungen auf die jeweiligen Testsignale wiedergeben. Unter Antworten werden dabei insbesondere Stromwerte oder -verläufe oder Spannungswerte oder -verläufe an den Ein- bzw. Ausgängen verstanden. Die Antwortsignale können grundsätzlich durch diese Strom- oder Spannungswerte oder -verläufe gegeben sein. Es ist jedoch auch möglich, andere Signale zu verwenden, die diese Werte oder Verläufe nur indirekt wiedergeben. Weiterhin können beispielsweise auch nur Extremwerte der Antworten bzw. Antwortsignale, beispielsweise Spitzenwerte, verwendet werden. Insbesondere kann von einer Antwort und/oder einem Antwortsignal nur ein Wert verwendet werden; es können jedoch auch mehrere Werte verarbeitet werden.

Das erfindungsgemäße Treibermodul weist hierzu die wenigstens eine Erfassungseinrichtung zur Erfassung von Antwortsignalen auf.

Für die Zwecke der Erfindung werden, wie bereits erwähnt, elektrische Einrichtungen in Typen eingeteilt, die durch die Antworten auf die Testsignale voneinander unterscheidbar sind. Beispielsweise unterscheiden sich die zeitlichen Verläufe von Stromsignalen als Antworten für im Wesentlichen ohmsche Verbraucher von solchen für Verbraucher, die Induktivitäten aufweisen, wie dies beispielsweise bei Elektromotoren der Fall ist. Darüber hinaus können noch Unterscheidungen über die Werte beispielsweise der Ströme bei vorgegebenen, den elektrischen Einrichtungen zugeführten Spannungen verwendet werden, so dass beispielsweise ohmsche Verbraucher entsprechend ihrem Widerstand unterschieden werden können.

Zur Ermittlung von so vorgegebenen Typen der an das Treibermodul angeschlossenen elektrischen Einrichtungen werden aus den Antwortsignalen Daten ermittelt, die dann mit Referenzdaten verglichen werden, die für die Typen von elektrischen Einrichtungen jeweils charakteristisch sind. Das erfindungsgemäße Treibermodul verfügt hierzu über die Speichereinrichtung, in der die Referenzdaten zur Identifikation von vorgegebenen Typen von elektrischen Einrichtungen und Parameter zur entsprechenden Konfiguration des Treibermoduls und/oder der Treiber und/oder der daran angeschlossenen elektrischen Einrichtungen in Abhängigkeit von den jeweiligen Typen gespeichert sind. Weiterhin ist die Konfigurationseinrichtung dazu ausgebildet, die erfassten Werte oder zeitlichen Verläufe der Antwortsignale mit entsprechenden vorgegebenen Referenzdaten zu vergleichen. Dazu können diese Werte und/oder Verläufe direkt verwendet werden, es können jedoch auf der Basis der Werte und/oder Verläufe Referenzwerte von Parametern abgeleitet werden, die dann zum Vergleich dienen.

Die Referenzdaten können dabei durch Spezifikationen für die vorgegebenen Typen von elektrischen Einrichtungen vorgegeben sein oder durch Messungen an entsprechenden, die Typen festlegenden elektrischen Einrichtungen erhalten worden sein.

Die Referenzdaten können insbesondere tabellenartig oder nach Art einer Datenbank in Datensätzen abgelegt sein, die neben den Referenzdaten den Typ und gegebenenfalls die zur Konfiguration verwendeten Parameter bzw. Parameterwerte enthalten.

In Abhängigkeit von den Ergebnissen des Vergleichs werden dann den ermittelten Typen entsprechende Parameter für das Treibermodul und/oder die mit den Ein- bzw. Ausgängen verbunden Treiber und/oder die daran angeschlossenen elektrischen Einrichtungen gesetzt.

Bei dem erfindungsgemäßen Treibermodul erfolgt die Konfiguration durch die Konfigurationseinrichtung, die die entsprechenden Parameter setzt und dazu beispielsweise mit den Treibern verbunden sein kann.

Die Erfindung ermöglicht also die Verwendung von Treibermodulen mit Treibern unabhängig von den konkret an sie angeschlossenen elektrischen Einrichtungen, indem das Treibermodul, gegebenenfalls einschließlich der in ihm enthaltenen Treiber und/oder der an diese angeschlossenen elektrischen Einrichtungen, in Abhängigkeit von den daran angeschlossenen Einrichtungen automatisch konfiguriert wird.

Dadurch, dass die Konfiguration in Abhängigkeit von den jeweils angeschlossenen elektrischen Einrichtungen erfolgt, kann eine Codierung der Kabel bzw. der verwendeten Steckverbinder entfallen, so dass in einem Kraftfahrzeug durchgängig gleiche Kabelbäume und Stecker sowie Treibermodule verwendet werden können, was zum einen die Herstellung derselben wesentlich vereinfacht und zum anderen die Produktion der Kfz-Elektrik erleichtert. Darüber hinaus muss für Reparaturen auch nur eine sehr viel geringere Anzahl von Treibermodultypen als Ersatzteile bereitgehalten werden, da sich die Treibermodule an ihre Funktion, d.h. an die an sie angeschlossenen elektrischen Einrichtungen, gewissermaßen anpassen.

Weiterbildungen und bevorzugte Ausführungsformen der Erfindung sind in der Beschreibung, den Ansprüchen und den Zeichnungen beschrieben.

Die Parameter, die nach dem Vergleich gesetzt werden, können bei einer bevorzugten Ausführungsform von einer externen Vorrichtung geliefert oder abgefragt werden, an die ermittelten Typen übermittelt wurden und die über entsprechende Daten verfügt. Es ist jedoch bevorzugt, dass die Parameter zur entsprechenden Konfiguration des Treibermoduls und/oder der Treiber und/oder der daran angeschlossenen elektrischen Einrichtungen in der Speichereinrichtung gespeichert sind. Zum Setzen der Parameter können bei dem erfindungsgemäßen Treibermodul dann insbesondere die in der Speichereinrichtung abgespeicherten Parameter zur Konfiguration des Treibermoduls und/oder der Treiber und/oder der daran angeschlossenen elektrischen Einrichtungen verwendet werden. Dazu können nach Feststellung des Typs einer angeschlossenen elektrischen Einrichtung insbesondere aus der Speichereinrichtung aus dem entsprechenden Datensatz in Bezug auf den Typ die entsprechenden Parameter ausgelesen und gesetzt werden.

Grundsätzlich ist es möglich, die Zuordnung von Treibern und mit ihnen verbundenen Ein- und Ausgängen konfigurierbar zu halten, vorzugsweise sind jedoch die Treiber fest mit den Ein- oder Ausgängen verbunden, wobei die Konfiguration dann allein durch Konfiguration der Treiber erfolgen kann. Dies vereinfacht den Aufbau des erfindungsgemäßen Treibermoduls.

Um einen Datenaustausch in Bezug auf einzelne elektrische Einrichtungen mit anderen Vorrichtungen der Kraftfahrzeugelektrik, insbesondere Schaltern oder einer zentralen Steuereinheit, oder den Empfang von Steuersignalen von solchen Vorrichtungen zu ermöglichen, sind Treibermodule häufig über entsprechende Signalkanäle mit diesen Vorrichtungen und insbesondere der zentralen Steuereinheit verbunden. Es ist dann bevorzugt, dass ein Treibermodul mit den elektrischen Einrichtungen zuzuordnenden Signalkanälen verwendet wird, über die Signale zur Ansteuerung der mit den elektrischen Einrichtungen verbundenen Treiber oder zur Übermittlung von Daten- oder Messsignalen von oder zu den elektrischen Einrichtungen und/oder den mit diesen verbundenen Treibern übertragbar sind, und dass bei der Konfiguration wenigstens ein Ein- oder Ausgang oder ein Treiber des Treibermoduls und damit die entsprechende elektrische Einrichtung und ein Signalkanal einander zugeordnet werden.

Bei dem erfindungsgemäßen Treibermodul ist es dazu bevorzugt, dass eine Schnittstelle für wenigstens zwei Signalkanäle von einer externen Vorrichtung vorgesehen ist, und dass die Konfigurationseinrichtung dazu ausgebildet ist, einem Treiber einen der Signalkanäle zuzuweisen. Insbesondere können die Signalkanäle Kanäle in einem Bus, wie beispielsweise einem CAN-Bus sein, so dass die Schnittstelle ebenfalls eine entsprechende Bus-Schnittstelle ist. Bei der externen Vorrichtung kann es sich beispielsweise um eine zentrale Steuereinheit handeln. Die Zuordnung von Treibern zu Kanälen kann vorzugsweise einer Zuordnung von elektrischen Einrichtungen zu Signalkanälen entsprechen. Das bedeutet, dass die Konfiguration des Treibermoduls auch eine Zuordnung der angeschlossenen elektrischen Einrichtungen zu für diese bestimmte oder zu bestimmende Steuer- oder Signalkanälen umfassen kann, über die Steuer- oder Datensignale von anderen Vorrichtungen zu den Treibern oder in umgekehrter Richtung übertragbar sind.

Um die Zuordnung für andere Vorrichtungen der Kfz-Elektrik, beispielsweise eine Steuereinheit, gegebenenfalls verfügbar zu machen, ist es bei dem erfindungsgemäßen Verfahren bevorzugt, dass Signalkanäle und jeweilige Typen von elektrischen Einrichtungen einander zugeordnet werden und dass diese Information abgespeichert wird. Bei dem erfindungsgemäßen Treibermodul ist es hierzu bevorzugt, dass die Konfigurationseinrichtung dazu ausgebildet ist, einen Signalkanal und den Typ der an dem entsprechenden Treiber angeschlossenen elektrischen Einrichtung einander zuzuordnen, und dass ein nichtflüchtiger Speicher vorgesehen ist, in dem entsprechende Daten speicherbar sind.

Die Signalkanäle können aber auch für bestimmte elektrische Einrichtungen vorgegeben sein. In diesem Fall ist es bevorzugt, dass die Referenzdaten für einen Typ von elektrischer Einrichtung eine Kennung für den zuzuordnenden Signalkanal umfasst.

Alternativ kann es bevorzugt sein, dass nur bestimmte Kombinationen von Typen von elektrischen Einrichtungen an das Treibermodul angeschlossen werden. In diesem Fall ist es bevorzugt, dass nach Ermittlung der Typen der angeschlossenen elektrischen Einrichtungen ein Muster der ermittelten Typen mit vorgegebenen, möglichen, gespeicherten Referenzmustern von Typen verglichen wird, bei denen jeder elektrischen Einrichtung ein durch eine Kennung gekennzeichneter vorbestimmter Signalkanal zugeordnet wird. Bei dem erfindungsgemäßen Treibermodul ist es hierzu bevorzugt, dass mögliche Referenzmuster von Typen von elektrischen Einrichtungen und diesen jeweils zugeordnete Sätze von Kennungen für Signalkanäle in einer weiteren Speichereinrichtung gespeichert sind, und dass die Konfigurationseinrichtung dazu ausgebildet ist, ein erfasstes Muster der Typen der angeschlossenen elektrischen Einrichtungen mit den Referenzmustern zu vergleichen und den angeschlossenen elektrischen Einrichtungen entsprechend dem Ergebnis des Vergleichs Signalkanäle zuzuordnen. Unter einem Muster wird dabei wenigstens die Angabe verstanden, welche Typen in welcher Anzahl ermittelt wurden. Sind die Treiber fest mit den Ein- oder Ausgängen verbunden, wird vorzugsweise noch die Reihenfolge der Typen bezogen auf die Ein- und Ausgänge mit berücksichtigt.

Ein erfindungsgemäßes Treibermodul kann verschieden aufgebaute Treiber aufweisen. Es ist jedoch bevorzugt, dass wenigstens zwei der Treiber im Wesentlichen gleich ausgebildet und konfigurierbar sind. Vorzugsweise ist dies bei allen Treibern eines Treibermoduls der Fall.

Grundsätzlich können beliebige Antwortsignale verwendet werden, die den Typ der elektrischen Einrichtungen wiedergeben. Es ist jedoch bevorzugt, dass als Antwortsignal jeweils ein Stromsignal und/oder ein Spannungssignal verwendet wird, das den Strom zu bzw. die Spannung an der jeweiligen elektrischen Einrichtung wiedergibt. Mit anderen Worten wird als Antwort jeweils ein Stromsignal und/oder ein Spannungssignal an dem mit der jeweiligen elektrischen Einrichtung verbundenen Ein- bzw. Ausgang verwendet. Auf diese Weise brauchen die elektrischen Einrichtungen über keine zusätzlichen Mittel zu verfügen, die beispielsweise zur Abgabe von Antworten oder Antwortsignalen speziell ausgebildet sind. Vielmehr können die ganz normalen elektrischen Eigenschaften der elektrischen Einrichtungen verwendet werden.

Dabei ist es besonders bevorzugt, dass wenigstens einer der Treiber als Lastschalter ein MOSFET-Bauelement mit Strommessung aufweist, das ein dem Laststrom entsprechendes Stromsignal abgibt, und dass als Antwortsignal ein durch das Stromsignal an einem Widerstandselement erzeugtes Spannungssignal verwendet wird. Bei dem erfindungsgemäßen Treibermodul ist es dazu bevorzugt, dass wenigstens einer der Treiber als Lastschalter ein MOSFET-Bauelement mit einer Strommessung und einem damit verbundenen Stromsignalausgang zur Abgabe von der Größe des zwischen Laststromanschlüssen des MOSFET-Bauelements fließenden Stroms entsprechenden Stromsignalen umfasst, dass in einem mit dem Stromsignalausgang verbundenen Stromsignalzweig, durch den das Stromsignal fließt, ein Widerstandselement angeordnet ist, und dass die Erfassungseinrichtung dazu ausgebildet ist, an dem Widerstandselement anliegende Spannungen als Antwortsignale zu erfassen. MOSFET-Bauelemente mit einer Strommessung, die häufig auch als "Current-Sense"-Funktion bezeichnet wird, sind als fertige Bauelemente erhältlich, was die Fertigung der erfindungsgemäßen Treibermodule wesentlich erleichtert. Unter einem Widerstandselement wird dabei jedes Bauelement verstanden, das einen elektrischen Widerstand, insbesondere einen Gleichstromwiderstand, aufweist, beispielsweise Widerstände oder auch Dioden. Das Spannungssignal ist also als Antwortsignal aufzufassen, das die durch den Laststrom gegebene Antwort einer an den jeweiligen Treiber angeschlossenen elektrischen Einrichtung wiedergibt.

Zum Vergleich mit Referenzdaten können grundsätzlich einzelne Werte eines Antwortsignals verwendet werden. Beispielsweise kann der Wert eines Antwortsignals in einem eingeschwungenen Zustand verwendet werden, in dem das entsprechende Testsignal einen konstanten Wert annimmt. Um eine möglichst große Anzahl von verschiedenen Typen von elektrischen Einrichtungen unterscheiden zu können, ist es bevorzugt, dass ein zeitlicher Verlauf wenigstens eines Antwortsignals nach einem durch das jeweilige Testsignal vorgegebenen Anfangszeitpunkt erfasst wird, und dass auf der Basis wenigstens des zeitlichen Verlaufs der Typ der jeweiligen elektrischen Einrichtung ermittelt wird. Bei dem erfindungsgemäßen Treibermodul ist es dazu bevorzugt, dass die Erfassungseinrichtung zur Erfassung eines zeitlichen Verlaufs wenigstens eines Antwortsignals ausgebildet ist, und dass die Konfigurationseinrichtung zur Ermittlung eines Typs einer jeweiligen elektrischen Einrichtung auf der Basis wenigstens des erfassten zeitlichen Verlaufs ausgebildet ist. Durch die Verwendung eines zeitlichen Verlaufs können insbesondere elektrische Eigenschaften der elektrischen Einrichtungen wie beispielsweise deren Kapazität oder Induktivität zusätzlich zu deren Widerstand zur Identifikation verwendet werden, was die Anzahl der möglichen unterscheidbaren Typen wesentlich erhöht. Von dem zeitlichen Verlauf kann dabei zum einen die relative Zeitentwicklung, das heißt in einer grafischen Veranschaulichung die Form einer entsprechenden Signalkurve, verwendet werden. Vorzugsweise werden jedoch auch absolute Werte des entsprechenden Antwortsignalverlaufs zur Identifikation verwendet, so dass beispielsweise verschiedene induktive Lasten voneinander unterschieden werden können.

Der Vergleich des zeitlichen Verlaufs der Antwortsignale mit entsprechenden Referenzdaten kann dabei auf unterschiedliche Art und Weise erfolgen.

So ist es bevorzugt, dass Einzelwerte des Antwortsignals zu vorgegebenen Zeitpunkten nach dem Anfangszeitpunkt erfasst werden, und dass die erfassten Einzelwerte des Antwortsignals mit entsprechenden als Referenzdaten gespeicherten Werten für einen gegebenen Typ von elektrischen Einrichtungen verglichen werden. Die Konfigurationseinrichtung des erfindungsgemäßen Treibermoduls kann dazu vorzugsweise entsprechende Vergleichsmittel zum Vergleich der Einzelwerte des Antwortsignals mit den entsprechenden, als Referenzdaten gespeicherten Werten aufweisen. Vorzugsweise sind die Zeitpunkte äquidistant gewählt. Es wird als gewissermaßen ein punktweiser Vergleich der Verläufe des Antwortsignals und eines entsprechenden Referenzsignals für eine den jeweiligen Typ definierende elektrische Referenzeinrichtung durchgeführt. Dabei kann als Kriterium beispielsweise verwendet werden, dass die Abweichungen zwischen Punkten des Antwortsignals und entsprechenden Punkten des Referenzsignals bzw. der Referenzdaten kleiner als ein vorgegebener Schwellwert sein müssen, damit eine Übereinstimmung festgestellt wird. Dieses Vorgehen zeichnet sich dadurch aus, dass in Bezug auf die Verarbeitung der Antwortsignale nur ein minimaler Aufwand notwendig ist.

Alternativ oder zusätzlich ist es bevorzugt, dass aus dem erfassten zeitlichen Verlauf des Antwortsignals Werte von Antwortsignalparametern ermittelt werden, die den zeitlichen Verlauf des Antwortsignals wenigstens teilweise wiedergeben, und dass der Vergleich der Antwortsignalverläufe mit Referenzsignalverläufen für die jeweiligen Typen definierende elektrische Referenzeinrichtungen durch Vergleich der ermittelten Werte der Antwortsignalparameter mit entsprechenden, für die Referenzsignalverläufe für die Referenzeinrichtungen ermittelten Referenzwerten der Parameter erfolgt.

Bei diesen Werten kann es sich beispielsweise um die Werte von maximalen oder minimalen Werten der Antwort- bzw. Referenzsignale in einem vorgegebenen Zeitintervall, Änderungsraten der Antwort- bzw. Referenzsignale zu einem oder mehreren vorgegebenen Zeitpunkten oder auch Krümmungen des Verlaufs des Antwort- bzw. Referenzsignals handeln. Weiterhin können den durch die Werte gegebenen Verlauf näherungsweise wiedergebende Ausgleichs- oder Interpolationsfunktionen bestimmt werden, indem Parameter oder Koeffizienten für solche Funktionen ermittelt werden. Beispielsweise könnten Polynome als Ausgleichsfunktionen verwendet werden.

Die Konfigurationseinrichtung eines erfindungsgemäßen Treibermoduls kann dazu insbesondere entsprechende Parameterermittlungseinrichtungen zur Ermittlung von Werten von Antwortsignalparametern und entsprechende Vergleichsmittel aufweisen.

Bei dem erfindungsgemäßen Verfahren ist es bevorzugt, dass als Testsignale Sprungsignale verwendet werden. Die Antwortsignale können dann insbesondere die Sprungantwort einer elektrischen Einrichtung wiedergeben, die von deren ohmschem Widerstand, deren Kapazität und deren Induktivität abhängen kann. Es wird so durch den Vergleich von Antwortsignalverläufen eine weitgehende Differenzierung zwischen elektrischen Einrichtungen möglich, so dass eine Vielzahl von Typen unterschieden werden kann, was eine sehr spezifische automatische Konfiguration ermöglichen kann.

Dabei ist es besonderes bevorzugt, dass das Testsignal durch Ein- oder Ausschalten einer entsprechenden elektrischen Einrichtung erzeugt wird.

Bei dem erfindungsgemäßen Treibermodul ist es dazu bevorzugt, dass die Konfigurationseinrichtung dazu ausgebildet ist, zur Erzeugung eines Testsignals einen der Treiber so anzusteuern, dass dieser einen Laststromkreis schließt oder öffnet. Auf diese Weise kann der Aufwand für die Bildung und Abgabe von Testsignalen minimal gehalten werden, so dass sich ein besonders einfacher Aufbau des erfindungsgemäßen Treibermoduls ergibt.

Grundsätzlich kann die Konfiguration des Treibermoduls auf ein entsprechendes, diesem zugeführtes Konfigurationssignal hin erfolgen. Es ist jedoch bevorzugt, dass bei der ersten Inbetriebnahme des Treibermoduls automatisch die Testsignale abgegeben, die Vergleiche durchgeführt und die Setzung der Parameter durchgeführt werden. Bei dem erfindungsgemäßen Treibermodul ist es bevorzugt, dass die Konfigurationseinrichtung dazu ausgebildet ist, bei der ersten Inbetriebnahme des Treibermoduls die Testsignale abzugeben, die Vergleiche durchzuführen und die Setzung der Parameter durchzuführen. Damit ergibt sich eine automatische Selbstkonfiguration des Treibermoduls bei der ersten Inbetriebnahme, so dass insbesondere bei Reparaturen nur ein defektes Treibermodul gegen ein neues ausgetauscht zu werden braucht, wobei dieses sich dann bei Inbetriebnahme der Kraftfahrzeugelektrik automatisch selbst konfiguriert. Auf diese Weise kann sehr einfach eine korrekte Konfiguration des Treibermoduls bei gleichzeitig minimalem Arbeitsaufwand erreicht werden.

Grundsätzlich können von den erfindungsgemäßen Treibermodulen elektrische Einrichtungen mit sehr unterschiedlich großen Strömen versorgt werden, so dass aus dieser Perspektive die Verwendung von Kabeln mit gleichem, dem maximalen Strom entsprechenden Kabelquerschnitt notwendig wäre. Dies hätte jedoch einen unnötig großen Materialverbrauch und unnötiges Gewicht der Kabel zur Folge. Darüber hinaus müssten auch die Treiber in Bezug auf den maximal möglichen Strom ausgelegt werden.

Es ist daher bevorzugt, dass wenigstens zwei Treiber des erfindungsgemäßen Treibermoduls für einen parallelen Betrieb konfigurierbar sind. Eine Last ist dann mit einer sehr großen Leistungs- und damit Stromaufnahme über zwei Leitungen mit zwei parallel betriebenen Treibern verbindbar, die diese dann zusammen ansteuern. Dadurch wird es möglich, für geringere maximale Ströme ausgelegte Lastschalteinrichtungen, beispielsweise MOSFET-Bauelemente, und Kabelbäume mit Kabeln gleichen Durchmessers zu wählen. Gleichzeitig kann trotzdem eine breite Anwendung des Treibermoduls erfolgen.

Bei dem erfindungsgemäßen Verfahren ist es dann bevorzugt, dass von nur einem Treiber ein Testsignal über nur einen Ein- oder einen Ausgang abgegeben wird, dass für allen anderen Ein- bzw. Ausgängen überprüft wird, ob für diese durch das Testsignal hervorgerufene Antwortsignale erfassbar sind, und dass bei positivem Resultat der Prüfung für wenigstens zwei entsprechende Ein- bzw. Ausgänge die damit verbundenen Treiber zum parallelen Betrieb konfiguriert werden. Bei dem erfindungsgemäßen Treibermodul ist es dazu bevorzugt, dass die Konfigurationseinrichtung dazu ausgebildet ist, nur einen Treiber so anzusteuern, dass ein Testsignal über nur einen Ein- oder einen Ausgang abgegeben wird, dass die Erfassungseinrichtung zur gleichzeitigen Erfassung von Antwortsignalen für alle Ein- und Ausgänge ausgebildet ist, und dass die Konfigurationseinrichtung weiter dazu ausgebildet ist, zu prüfen, für welche Ein- bzw. Ausgängen Antwortsignale erfassbar sind, und bei positivem Resultat der Prüfung für wenigstens zwei entsprechende Ein- bzw. Ausgänge die damit verbundenen Treiber zum parallelen Betrieb zu konfigurieren. Insbesondere kann beiden Treibern der gleiche Signalkanal zugeordnet werden. Auf diese Weise können sehr einfach zwei parallel zu betreibende Treiber einer elektrischen Einrichtung zugeordnet werden, die einen besonders hohen Stromverbrauch aufweist.

Weiterhin ist es bevorzugt, dass in das Treibermodul über einen entsprechenden Kanal von einer angeschlossenen elektrischen Einrichtung eine Kennung der elektrischen Einrichtung eingelesen wird, die diese über die über das Antwortsignal ermittelten Parameter hinaus nochmals genauer spezifiziert, so dass eine noch feinere Unterscheidung verschiedener Typen ermöglicht wird.

Die Erfindung wird nun weiter beispielhaft anhand der Zeichnungen erläutert. Es zeigen:
- Fig. 1: eine schematische Darstellung eines Treibermoduls nach einer ersten bevorzugten Ausführungsform der Erfindung mit daran angeschlossenen Verbrauchern,
- Fig. 2: eine schematische Darstellung eines Verlaufs eines Laststroms I als Funktion der Zeit t für eine im Wesentlichen kapazitive Last bei einem sprunghaften Einschalten der Last,
- Fig. 3: eine schematische Darstellung eines Verlaufs eines Laststroms I als Funktion der Zeit t für eine ohmsche Last bei einem sprunghaften Einschalten der Last,
- Fig. 4: eine schematische Darstellung eines Verlaufs eines Laststroms I als Funktion der Zeit t für eine induktive Last bei einem sprunghaften Ein- und Ausschalten der Last, und
- Fig. 5: eine schematische Darstellung eines Verlaufs eines Laststroms I als Funktion der Zeit t für eine gegebene Last zur Erläuterung der Erfassung des Verlaufs dieser Kennlinie.

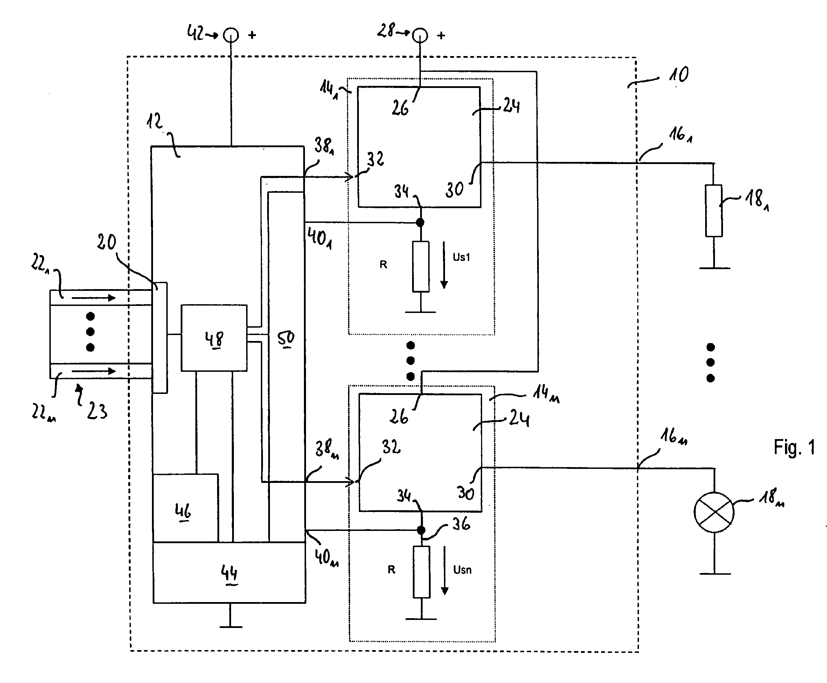

In Fig. 1 verfügt ein Treibermodul 10 nach einer ersten bevorzugten Ausführungsform der Erfindung über eine Steuer- und Auswerteeinheit 12 sowie n gleich ausgebildete, konfigurierbare Treiberschaltungen 14₁ bis 14ₙ, die über Ausgänge 16₁ bis 16ₙ, an die voneinander verschiedenen von dem Treibermodul 10 zu betreibenden elektrischen Einrichtungen, d.h. hier Verbraucher bzw. Lasten 18₁ bis 18ₙ, angeschlossen sind. Weiterhin ist es über eine Busschnittstelle 20 der Steuer- und Auswerteeinheit 12, beispielsweise für einen CAN-Bus, mit Signalkanälen 22₁ bis 22ₙ des Bus 23 verbunden, über die Steuersignale zum Ein- bzw. Ausschalten der Lasten 18₁ bis 18ₙ an das Treibermodul 10 abgebbar sind. n bezeichnet dabei eine natürliche Zahl, vorzugsweise größer als 1.

Die Treiberschaltungen 14₁ bis 14ₙ sind jeweils gleich ausgebildet, so dass deren Aufbau am Beispiel der Treiberschaltung 14₁ erläutert wird.

Die Treiberschaltung 14₁ umfass als Lastschalter ein n-Kanal-MOSFET-Bauelement 24 in einer so genannten "High-Side"-Anordnung, bei der dessen Drain-Anschluss 26 mit einem Pluspol einer Versorgungsspannungquelle 28, im Beispiel einer Kraftfahrzeugbatterie, und dessen Source-Anschluss 30 mit der Last 18₁ verbunden ist. Der jeweils andere Anschluss der Last 18₁ liegt auf Masse, mit der auch der Minuspol der Versorgungsspannungsquelle 28 verbunden ist.

Zur Zuführung von Schaltsignalen ist der Gate-Anschluss 32 des MOSFET-Bauelements 24 mit einem entsprechenden Schaltsignalausgang der Steuer- und Auswerteeinrichtung 20 verbunden.

Das MOSFET-Bauelement 24 verfügt weiterhin über eine Strommessfunktion ("Current-Sense"-Funktion). Über einen Stromsignalausgang 34 wird an einen Stromsignalzweig 36 mit einem darin angeordneten, mit Masse verbundenen Widerstand R ein Stromsignal abgegeben, dessen Stromstärke der Stärke des durch das MOSFET-Bauelement 24 zwischen dem Drain- und dem Source-Anschluss 26 bzw. 30 geleiteten Laststroms entspricht.

Durch Zuführung entsprechender Schaltsignale über Schaltsignalausgänge 38₁ bis 38ₙ der Steuer- und Auswerteschaltung 12 können so mittels der als Lastschalter fungierenden MOSFET-Bauelemente 24 der Treiberschaltungen 14₁ bis 14ₙ die jeweils an diese angeschlossenen Lasten 18₁ bis 18ₙ ein- und ausgeschaltet werden.

Über dem Widerstand R jeweils abfallende, zu dem Stromsignal proportionale Spannungen Us 1 bis Usn werden von den Treiberschaltungen jeweils Analogeingängen 40₁ bis 40ₙ der Steuer- und Auswerteeinrichtung 12 zugeführt.

Die Steuer- und Auswerteeinrichtung 12 wird über eine weitere Spannungsquelle 42 mit Spannung versorgt.

Sie verfügt, in Fig. 1 nur grob schematisch durch entsprechende Blöcke angedeutet, über eine erste Speichereinrichtung 44 in Form eines EEPROM, eine zweite Speichereinrichtung 46 mit einem nichtflüchtigen Speicher, eine Konfigurationseinrichtung 48 und eine Erfassungseinrichtung 50.

Die Erfassungseinrichtung 50 verfügt über einen oder mehrere in den Figuren nicht gezeigte Analog-Digital-Wandler, deren Eingänge mit den Analogeingängen 40₁ bis 40ₙ verbunden sind, um an diesen anliegende Spannungssignale in Digitalwerte umzusetzen.

Mittels der Steuer- und Auswerteeinrichtung 12 sind die Treiberschaltungen 14₁ bis 14ₙ konfigurierbar, wobei den Signalkanälen 22₁ bis 22ₙ entsprechend der Konfiguration Schaltsignalausgänge 38₁ bis 38ₙ und damit Treiberschaltungen 14₁ bis 14ₙ, Ausgänge 16₁ bis 16ₙ bzw. Lasten 18₁ bis 18ₙ zuordenbar sind. Durch die Schaltsignale und die Signale an den Analogeingängen 40₁ bis 40ₙ kann beispielsweise festgelegt oder überprüft werden, wie groß der maximal erlaubte Laststrom ist bzw. ob dieser überschritten wurde, so dass die Steuer- und Auswerteeinrichtung 12 dann insofern als konfigurierbarer Teil eines Treibers mit der jeweils angesteuerten Treiberschaltung anzusehen ist.

Die Steuer- und Auswerteeinrichtung 12 ist so ausgebildet, dass nach erstmaligem Inbetriebnehmen des Treibermoduls 10 dieses selbsttätig automatisch in Abhängigkeit von den an dieses angeschlossenen Lasten 18₁ bis 18ₙ konfiguriert wird.

Die Konfiguration des Treibermoduls 10 erfolgt nach dem im Folgenden geschilderten Verfahren nach einer bevorzugten Ausführungsform der Erfindung.

Bei einer ersten Verbindung des Treibermoduls 10 mit der Versorgungsspannungsquelle 28 bzw. Spannungsversorgung 42 gibt die Konfigurationseinrichtung 48 parallel oder nacheinander Schaltsignale über die Schaltsignalausgänge 38₁ bis 38ₙ an die Treiberschaltungen 14₁ bis 14ₙ, insbesondere deren Gate-Anschlüsse 32 ab, mittels derer die Kanäle zwischen den Drain-Anschlüssen 26 und den Source-Anschlüssen 30 aus einem nicht leitenden in einen leitenden Zustand versetzt werden.

Die Schaltsignale sind dabei so gewählt, dass die an den Lasten 18₁ bis 18ₙ anliegenden Spannungen in Form einer Sprungfunktion von Null auf einen vorgegebenen Spannungswert springen.

Infolge dieses Sprungs fließt durch das entsprechende MOSFET-Bauelement 24 jeweils ein Laststrom, dessen zeitlicher Verlauf durch die elektrischen Eigenschaften der jeweils mit der entsprechenden Treiberschaltung 14₁ bis 14ₙ verbundenen elektrischen Lasten 18₁ bis 18ₙ gegeben ist. Die Lastströme sind daher als Antworten im Sinne der Erfindung auf Testsignale zu verstehen, die durch das Einschalten der Lasten 18₁ bis 18ₙ gegeben werden.

Entsprechend den zeitlichen Verläufen der jeweiligen Lastströme werden über die entsprechenden Stromsignalzweige 36 Stromsignale mit jeweils den Lastströmen entsprechenden Strömen abgegeben, die an den Analogeingängen 40₁ bis 40ₙ zu entsprechenden Spannungssignalverläufen Us1 bis Usn führen, die den Stromsignalverläufen und damit den Laststromverläufen entsprechen, und damit Antwortsignale im Sinne der Erfindung darstellen.

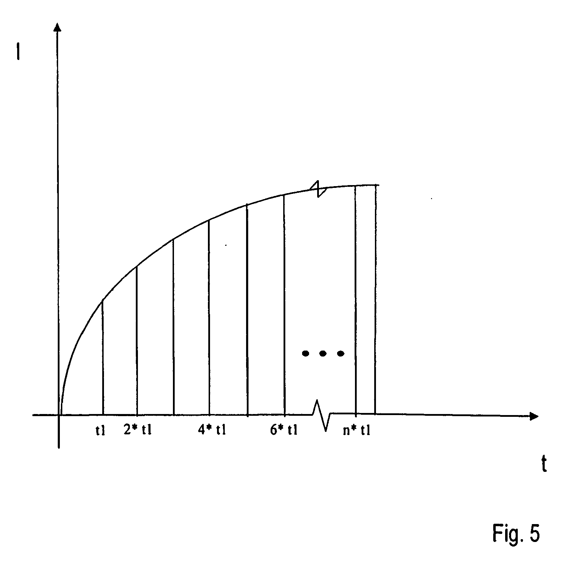

Diese Antwortsignale werden unter Analog-Digital-Wandlung in der Erfassungseinrichtung 50 erfasst und zwischengespeichert. Dabei werden, wie in Fig. 5 schematisch gezeigt, jeweils Spannungswerte in gleichen Zeitintervallen t1 beginnend mit dem Zeitpunkt, zu dem die Spannung an den Ausgängen 16₁ bis 16ₙ jeweils auf den durch die Versorgungsspannungsquelle 28 gegebenen Wert springt, erfasst und zwischengespeichert.

Die erfassten Signalverläufe geben, wie bereits zuvor erwähnt, elektrische Eigenschaften der Lasten 18₁ bis 18ₙ wieder, so dass anhand der Verläufe der Antwortsignale verschiedene Typen der Lasten ermittelt werden können.

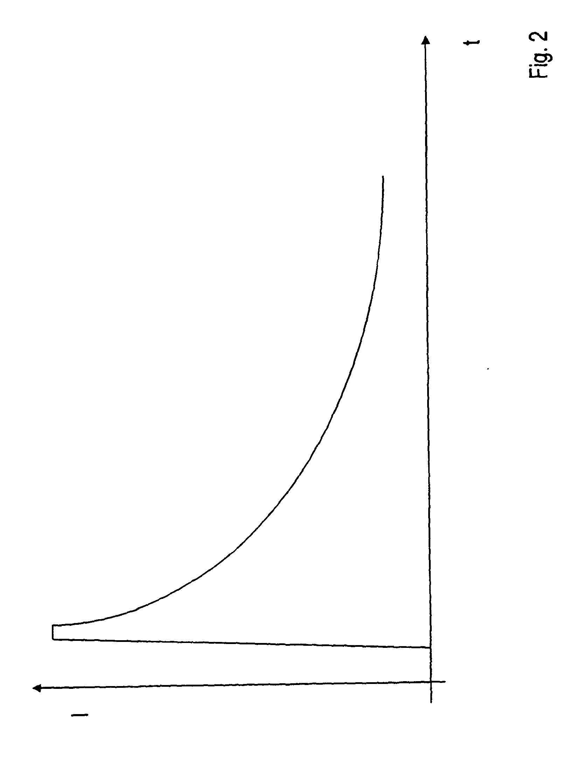

In den Fig. 2 bis 4 sind beispielhaft Antworten, d.h. Verläufe von Lastströmen I als Funktion der Zeit t für verschiedene idealisierte elektrische Einrichtungen gezeigt, deren Eigenschaften auf einen Sprung in der Spannung durch entsprechende Kennlinien für eine im Wesentlichen kapazitive Last, einen konstanten ohmschen Widerstand und eine induktive Last, beispielsweise eine Spule, gegeben sind. Die Antwortsignale an den Analogeingängen 40₁ bis 40ₙ wären im Wesentlichen proportional zu diesen Verläufen.

Fig. 2 zeigt den typischen Verlauf für eine Reihenschaltung aus einem Widerstand und einem Kondensator bzw. einer Kapazität, wobei der Kennlinienverlauf durch die Größe des Widerstandes bzw. die Größe der Kapazität bestimmt ist.

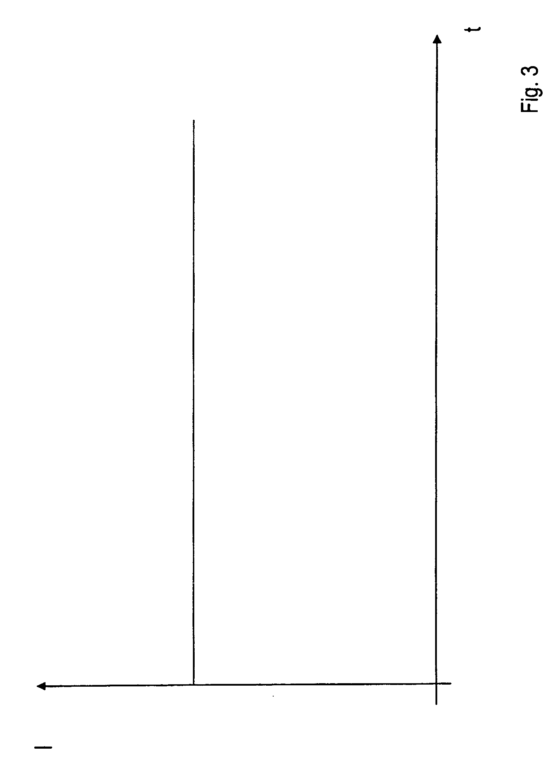

Fig. 3 zeigt die Antwort einer Last mit rein ohmschem Widerstand, bei der ohne einen Einschwingvorgang praktisch sofort ein stationärer, der Größe des Widerstands entsprechender Stromwert erreicht wird.

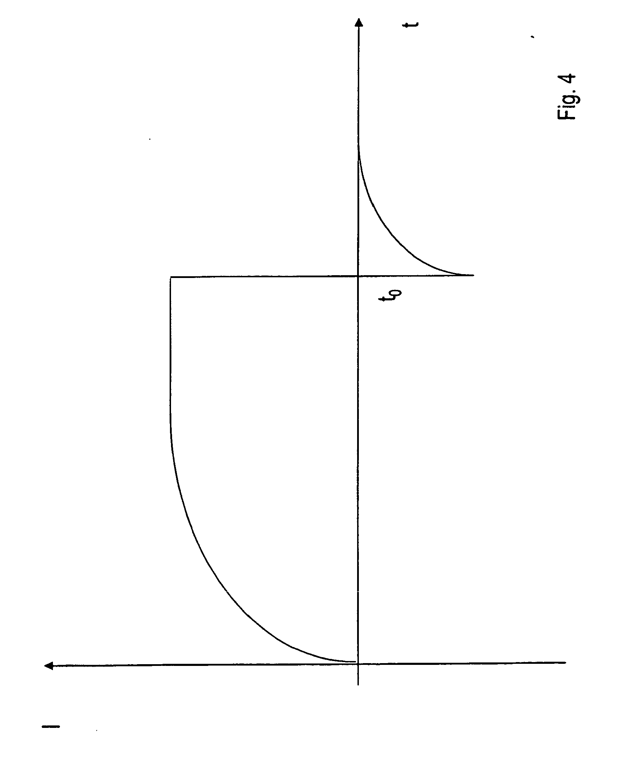

Fig. 4 schließlich zeigt die Antwort einer induktiven Last, beispielsweise eines Motors, beim Einschalten und späteren Ausschalten zum Zeitpunkt to. Auch hier wird der Verlauf in an sich bekannter Weise durch den Widerstand und die Induktivität der Last bestimmt.

Ein weiterer besonderer Typ von Last wird durch Glühbirnen dargestellt, bei denen zunächst ein sehr großer Strom auftritt, da der Glühfaden im kalten Zustand eine relativ hohe Leitfähigkeit aufweist. Der Strom fällt dann jedoch sehr schnell wieder auf einen niedrigeren Wert ab, da sich der Glühfaden aufheizt und damit einen höheren Widerstand erhält. Danach wird ein konstanter Strom ähnlich wie bei einem ohmschen Widerstand erreicht. Auf diese Weise können anhand des Verlaufs und des asymptotischen Wertes des Stroms nicht nur Glühbirnen erkannt, sondern auch deren Parameter, beispielsweise die Leistungsaufnahme, ermittelt werden.

Neben einer Grobeinteilung in kapazitive, induktive und ohmsche Lasten und beispielsweise Glühbirnen können noch entsprechende Werte der typischen Parameter, beispielsweise der Kapazität, der Induktivität und des Widerstands zur Einteilung in verschiedene Typen verwendet werden.

Ausgehend von möglichen, mit dem Treibermodul 10 zu betreibenden Lasten werden vor der eigentlichen Konfiguration Referenzdaten ermittelt, die den Kennlinienverlauf bzw. den Verlauf der Antwortsignale der Lasten wiedergeben und so eine Einteilung der Lasten in Typen erlauben.

Die Referenzdaten sind in Verbindung mit den entsprechenden Typen sowie den zur Konfiguration zu verwendenden typenabhängigen Parametern einschließlich der Kennungen der Signalkanäle 22₁ bis 22ₙ tabellenartig in der ersten Speichereinrichtung 44 abgelegt.

Im vorliegenden Beispiel werden als Referenzdaten nicht die Signalverläufe der entsprechenden Referenzeinrichtungen selbst verwendet. Vielmehr werden basierend auf in konstanten Zeitabständen erfassten Werten von Analogsignalen für die vorgegebenen, die Typen definierenden Referenzeinrichtungen Referenzwerte von Parametern von vorgegebenen Ausgleichsfunktionen ermittelt, die den Verlauf der Analogsignale für die Referenzeinrichtungen näherungsweise wiedergeben. Beispielsweise können als Ausgleichsfunktionen Splines verwendet werden. Es werden dann nur die entsprechenden Koeffizienten ermittelt und als Referenzdaten für die Typen abgespeichert.

Der Vergleich der für die Lasten 18₁ bis 18ₙ erfassten Antwortsignale erfolgt nun derart, dass ausgehend von den in konstanten Zeitabständen erfassten Analogsignalwerten die vorgegebene Ausgleichsfunktion durch diese Werte gelegt wird, deren funktionale Form der funktionalen Form der bei der Ermittlung der Referenzdaten verwendeten Ausgleichsfunktion entspricht. Dabei werden Werte der Parameter bzw. Koeffizienten der Ausgleichsfunktion so ermittelt, dass diese die erfassten Antwortsignale möglichst gut wiedergeben.

Für eine gegebene Treiberschaltung 14ⱼ bzw. eine gegebene Last 18ⱼ (j = 1, ..., n) wird der erhaltene Satz von Parameterwerten mit den entsprechenden Referenzwerten in der ersten Speichereinrichtung 44 verglichen. Bei einer hinreichenden Übereinstimmung, die beispielsweise festgestellt werden kann, wenn die Beträge der Abweichungen der sich entsprechenden Parameter voneinander jeweils unterhalb eines vorgegebenen Grenzwertes bleiben, wird ein entsprechender Typ für die Last ermittelt. Von der Konfigurationseinrichtung 48 werden dem Typ entsprechende in der ersten Speichereinrichtung 44 abgelegte Parameter für die jeweilige Treiberschaltung 14ⱼ aus der ersten Speichereinrichtung ausgelesen und gesetzt, die beispielsweise den maximal möglichen Strom bzw. die maximale Größe eines entsprechenden Schaltsignals für diese Treiberschaltung und die Art der Ansteuerung, beispielsweise durch Pulsweitenmodulation oder mit einer konstanten Spannung, betreffen können.

Weiterhin werden den Lasten 18₁ bis 18ₙ jeweils beliebig vorgegebene Signalkanäle 22₁ bis 22ₙ zugeordnet, wobei die Zuordnung durch Angabe der Ausgänge 16₁ bis 16ₙ bzw. Treiberschaltungen 14₁ bis 14ₙ, der jeweils an diese angeschlossenen Typen von Lasten und Kennungen entsprechender Signalkanäle erfolgen kann. Diese Daten werden in der zweiten Speichereinrichtung 46 zum Abruf durch eine zentrale Steuereinrichtung abgelegt.

Die Daten können von der zentralen Steuereinrichtung ausgelesen werden, so dass diese entsprechend den Typen und Signalkanalkennungen über Steuersignale über die Signalkanäle die jeweiligen Lasten mittels des Treibermoduls 10 steuern kann.

Bei einer zweiten Ausführungsform eines erfindungsgemäßen Treibermoduls und eines erfindungsgemäßen Verfahrens ist nur die Art und Weise der Zuordnung von Signalkanälen geändert. Dazu wird wie im ersten Ausführungsbeispiel ermittelt, an welchem Ausgang 16₁ bis 16ₙ welcher Typ von Last angeschlossen ist. Damit ergibt sich ein Muster von Typen, das durch die Angabe der ermittelten Typen in der Reihenfolge der Ausgänge 16₁ bis 16ₙ gegeben ist.

In der zweiten Speichereinrichtung sind nun, im Gegensatz zum ersten Ausführungsbeispiel, alle in der Praxis möglichen Referenzmuster von Typen in Verbindung mit entsprechenden Mustern von Kennungen von Signalkanälen gespeichert. Die Konfigurationseinrichtung vergleicht das ermittelte Muster mit den gespeicherten Mustern und ordnet jeder Last 18ⱼ denjenigen Signalkanal 22ₖ zu, der bei dem gleichen Referenzmuster für den Typ an diesem Ausgang 16ⱼ vorgegeben ist.

### Bezugszeichenliste

- 10: Treibermodul
- 12: Steuer- und Auswerteeinrichtung
- 14₁ bis 14ₙ: Treiberschaltungen
- 16₁ bis 16ₙ: Ausgänge
- 18₁ bis 18ₙ: Lasten
- 20: Busschnittstelle
- 22₁ bis 22ₙ: Signalkanäle
- 23: Bus
- 24₁ bis 24ₙ: MOSFET-Bauelemente
- 26: Drain-Anschluss
- 28: Versorgungsspannungsquelle
- 30: Source-Anschluss
- 32: Gate-Anschluss
- 34: Stromsignalausgang
- 36: Stromsignalzweig
- 38₁ bis 38ₙ: Schaltsignalausgänge
- 40₁ bis 40ₙ: Analogeingänge
- 42: Spannungsversorgung
- 44: erste Speichereinrichtung
- 46: zweite Speichereinrichtung
- 48: Konfigurationseinrichtung
- 50: Erfassungseinrichtung

- R: Widerstände

## Patentansprüche

1. Verfahren zur Konfiguration eines konfigurierbaren Treibermoduls, das wenigstens zwei mit Ein- und/oder Ausgängen (16₁, ..., 16ₙ) des Treibermoduls verbundene Treiber (14₁, ..., 14ₙ) für elektrische Einrichtungen (18₁, ..., 18ₙ) umfasst, in Bezug auf wenigstens zwei an das Treibermodul (10) über die Ein- und / oder Ausgänge (16₁, ..., 16ₙ) angeschlossene elektrische Einrichtungen (18₁, ..., 18ₙ), bei dem
an die Ein- bzw. Ausgänge (16₁, ..., 16ₙ) vorgegebene elektrische Testsignale angelegt werden,
Antwortsignale erfasst werden, die die Antworten der elektrischen Einrichtungen (18₁, ..., 18ₙ) auf die jeweiligen Testsignale wiedergeben,
zur Ermittlung von vorgegebenen Typen der angeschlossenen elektrischen Einrichtungen (18₁, ..., 18ₙ) aus den Antwortsignalen ermittelte Daten mit entsprechenden vorgegebenen Referenzdaten für mögliche vorgegebene Typen von elektrischen Einrichtungen (18₁, ..., 18ₙ), für die das Treibermodul (10) vorgesehen ist, verglichen werden, und
in Abhängigkeit von den Vergleichsergebnissen den ermittelten Typen entsprechende Parameter für das Treibermodul (10) und/oder die mit den Ein- bzw. Ausgängen (16₁, ..., 16ₙ) verbundenen Treiber (14₁, ..., 14ₙ) und/oder die daran angeschlossenen elektrischen Einrichtungen (18₁, ..., 18ₙ) gesetzt werden.

2. Verfahren nach Anspruch 1,
**dadurch gekennzeichnet,**
**dass** ein Treibermodul (10) mit den elektrischen Einrichtungen (18₁, ..., 18ₙ) zuzuordnenden Signalkanälen (22₁, ..., 22ₙ) verwendet wird, über die Signale zur Ansteuerung der mit den elektrischen Einrichtungen (18₁, ..., 18ₙ) verbundenen Treiber (14₁, ..., 14ₙ) oder zur Übermittlung von Daten- oder Messsignalen von oder zu den elektrischen Einrichtungen (18₁, ..., 18ₙ) und/oder den mit diesen verbunden Treibern (14₁, ..., 14ₙ) übertragbar sind, und
**dass** bei der Konfiguration wenigstens ein Ein- oder Ausgang (16₁, ..., 16ₙ) oder ein Treiber (14₁, ..., 14ₙ) des Treibermoduls (10) und damit die entsprechende elektrische Einrichtung (18₁, ..., 18ₙ) und ein Signalkanal (22₁, ..., 22ₙ) einander zugeordnet werden.

3. Verfahren nach Anspruch 2,
**dadurch gekennzeichnet,**
**dass** Signalkanäle (22₁, ..., 22ₙ) und jeweilige Typen von elektrischen Einrichtungen (18₁, ..., 18ₙ) einander zugeordnet werden und
**dass** diese Information abgespeichert wird.

4. Verfahren nach einem der vorhergehenden Ansprüche,
**dadurch gekennzeichnet,**
**dass** als Antwortsignal jeweils ein Stromsignal und/oder ein Spannungssignal verwendet wird, das den Strom zu bzw. die Spannung an der jeweiligen elektrischen Einrichtung (18₁, ..., 18ₙ) wiedergibt.

5. Verfahren nach Anspruch 4,
**dadurch gekennzeichnet,**
**dass** wenigstens einer der Treiber (14₁, ..., 14ₙ) als Lastschalter ein MOSFET-Bauelement (24₁, ..., 24ₙ) mit Strommessung aufweist, das ein dem Laststrom entsprechendes Stromsignal abgibt, und
**dass** als Antwortsignal ein durch das Stromsignal an einem Widerstandselement (R) erzeugtes Spannungssignal verwendet wird.

6. Verfahren nach einem der vorhergehenden Ansprüche,
**dadurch gekennzeichnet,**
**dass** ein zeitlicher Verlauf wenigstens eines Antwortsignals nach einem durch das jeweilige Testsignal vorgegebenen Anfangszeitpunkt erfasst wird, und
**dass** auf der Basis wenigstens des zeitlichen Verlaufs der Typ der jeweiligen elektrischen Einrichtungen (18₁, ..., 18ₙ) ermittelt wird.

7. Verfahren nach Anspruch 6 ,
**dadurch gekennzeichnet,**
**dass** Einzelwerte des Antwortsignals zu vorgegebenen Zeitpunkten nach dem Anfangszeitpunkt erfasst werden, und
**dass** die erfassten Einzelwerte des Antwortsignals mit entsprechenden als Referenzdaten gespeicherten Werten für einen gegebenen Typ von elektrischen Einrichtungen (18₁, ..., 18ₙ) verglichen werden.

8. Verfahren nach Anspruch 6 oder 7,
**dadurch gekennzeichnet,**
**dass** aus dem erfassten zeitlichen Verlauf des Antwortsignals Werte von Antwortsignalparametern ermittelt werden, die den zeitlichen Verlauf des Antwortsignals wenigstens teilweise wiedergeben, und
**dass** der Vergleich der Antwortsignalverläufe mit Referenzsignalverläufen für die jeweiligen Typen definierende elektrische Referenzeinrichtungen durch Vergleich der ermittelten Werte der Antwortsignalparameter mit entsprechenden, für die Referenzsignalverläufe für die Referenzeinrichtungen ermittelten Referenzwerten der Parameter erfolgt.

9. Verfahren nach einem der vorhergehenden Ansprüche,
**dadurch gekennzeichnet,**
**dass** als Testsignale Sprungsignale verwendet werden.

10. Verfahren nach Anspruch 9,
**dadurch gekennzeichnet,**
**dass** das Testsignal durch Ein- oder Ausschalten einer entsprechenden elektrischen Einrichtung (18₁, ..., 18ₙ) erzeugt wird.

11. Verfahren nach einem der vorhergehenden Ansprüche,
**dadurch gekennzeichnet,**
**dass** bei der ersten Inbetriebnahme des Treibermoduls (10) automatisch die Testsignale abgegeben, die Vergleiche durchgeführt und die Setzung der Parameter durchgeführt werden.

12. Verfahren nach einem der vorhergehenden Ansprüche,
**dadurch gekennzeichnet,**
**dass** von nur einem Treiber ein Testsignal über nur einen Ein- oder einen Ausgang abgegeben wird,
**dass** für alle anderen Ein- bzw. Ausgängen überprüft wird, ob für diese durch das Testsignal hervorgerufene Antwortsignale erfassbar sind, und
**dass** bei positivem Resultat der Prüfung für wenigstens zwei entsprechende Ein- bzw. Ausgänge die damit verbundenen Treiber durch zuordnen des gleichen Signalkanals zum parallelen Betrieb konfiguriert werden.

13. Konfigurierbares Treibermodul mit
wenigstens zwei Treibern (14₁, ..., 14ₙ) für elektrische Einrichtungen (18₁, ..., 18ₙ), wobei die Treiber (14₁, ..., 14ₙ) jeweils mit Ein-und/oder Ausgängen (16₁, ..., 16ₙ) des Treibermoduls (10) verbunden sind,
einer Speichereinrichtung (44), in der Referenzdaten zur Identifikation von vorgegebenen Typen von elektrischen Einrichtungen (18₁, ..., 18ₙ) gespeichert sind,
einer Konfigurationseinrichtung (48), mittels derer wenigstens eine Testsignalabgabeeinrichtung oder die Treiber (14₁, ..., 14ₙ) zur Abgabe von Testsignalen an die Ein- und/oder Ausgänge (16₁, ..., 16ₙ) ansteuerbar sind, und
wenigstens einer Erfassungseinrichtung (50) zur Erfassung von Antwortsignalen, die die Antworten von elektrischen Einrichtungen (18₁, ..., 18ₙ) , die über die Ein- und/oder Ausgänge des Treibermoduls angeschlossen sind, auf die jeweiligen Testsignale wiedergeben,
wobei die Konfigurationseinrichtung (58) weiter dazu ausgebildet ist, erfasste Werte und/oder die zeitlichen Verläufe der Antwortsignale mit entsprechenden vorgegebenen Referenzdaten für mögliche Typen von an das Treibermodul (10) anschließbaren elektrischen Einrichtungen (18₁, ..., 18ₙ) zu vergleichen, und in Abhängigkeit von den Vergleichsergebnissen die Typen der angeschlossenen elektrischen Einrichtungen zu ermitteln und den ermittelten Typen entsprechende Parameter für das Treibermodul (10) und/oder die mit den Ein- bzw. Ausgängen (16₁, ..., 16ₙ) verbundenen Treiber (14₁, ..., 14ₙ) und/oder die daran angeschlossenen elektrischen Einrichtungen (18₁, ..., 18ₙ) zu setzen.

14. Treibermodul nach Anspruch 13,
**dadurch gekennzeichnet,**
**dass** in der Speichereinrichtung (44) Parameter zur entsprechenden Konfiguration des Treibermoduls (10) und/oder der Treiber (14₁, ..., 14ₙ) und/oder der daran angeschlossenen elektrischen Einrichtungen gespeichert sind.

15. Treibermodul nach Anspruch 13 oder 14,
**dadurch gekennzeichnet,**
**dass** eine Schnittstelle (20) für wenigstens zwei Signalkanäle (22₁, ..., 22ₙ) von einer externen Vorrichtung vorgesehen ist, und dass die Konfigurationseinrichtung (48) dazu ausgebildet ist, einem Treiber (14₁, ..., 14ₙ) einen der Signalkanäle (22₁, ..., 22ₙ) zuzuweisen.

16. Treibermodul nach einem der Ansprüche 13 bis 15,
**dadurch gekennzeichnet,**
**dass** die Konfigurationseinrichtung (48) dazu ausgebildet ist, einen Signalkanal (22₁, ..., 22ₙ) und den Typ der an dem entsprechenden Treiber (14₁, ..., 14ₙ) angeschlossen elektrischen Einrichtung (18₁, ..., 18ₙ) einander zuzuordnen, und
**dass** ein nichtflüchtiger Speicher (46) vorgesehen ist, in dem entsprechend Daten speicherbar sind.

17. Treibermodul nach einem der Ansprüche 13 bis 16,
**dadurch gekennzeichnet,**
**dass** wenigstens zwei der Treiber (14₁, ..., 14ₙ) gleich ausgebildet und konfigurierbar sind.

18. Treibermodul nach einem der Ansprüche 13 bis 17,
**dadurch gekennzeichnet,**
**dass** wenigstens einer der Treiber (14₁, ..., 14ₙ) als Lastschalter ein MOSFET-Bauelement (24₁, ..., 24ₙ) mit einer Strommessung und einem damit verbundenen Stromsignalausgang (34) zur Abgabe von der Größe des zwischen Laststromanschlüssen (26, 30) des MOSFET-Bauelements (22₁, ..., 22ₙ) fließenden Stroms entsprechenden Stromsignalen umfasst,
**dass** in einem mit dem Stromsignalausgang (34) verbundenen Stromsignalzweig (36), durch den das Stromsignal fließt, ein Widerstandselement (R) angeordnet ist, und
**dass** die Erfassungseinrichtung (50) dazu ausgebildet ist, an dem Widerstandselement (R) anliegende Spannungen als Antwortsignale zu erfassen.

19. Treibermodul nach einem der Ansprüche 13 bis 18,
**dadurch gekennzeichnet,**
**dass** die Erfassungseinrichtung (50) zur Erfassung eines zeitlichen Verlaufs wenigstens eines Antwortsignals ausgebildet ist, und
**dass** die Konfigurationseinrichtung (48) zur Ermittlung eines Typs einer jeweiligen elektrischen Einrichtung (18₁, ..., 18ₙ) auf der Basis wenigstens des erfassten zeitlichen Verlaufs ausgebildet ist.

20. Treibermodul nach einem der Ansprüche 13 bis 19,
**dadurch gekennzeichnet,**
**dass** die Konfigurationseinrichtung (48) dazu ausgebildet ist, zur Erzeugung eines Testsignals einen der Treiber (22₁, ..., 22ₙ) so anzusteuern, dass dieser einen Laststromkreis schließt oder öffnet.

21. Treibermodul nach einem der Ansprüche 13 bis 20,
**dadurch gekennzeichnet,**
**dass** die Konfigurationseinrichtung (48) dazu ausgebildet ist, bei der ersten Inbetriebnahme des Treibermoduls (10) die Testsignale abzugeben, die Vergleiche durchzuführen und die Setzung der Parameter durchzuführen.

22. Treibermodul nach einem der Ansprüche 13 bis 21,
**dadurch gekennzeichnet,**
**dass** die Konfigurationseinrichtung dazu ausgebildet ist, nur einen Treiber so anzusteuern, dass ein Testsignal über nur einen Eingang oder einen Ausgang abgegeben wird,
**dass** die Erfassungseinrichtung zur gleichzeitigen Erfassung von Antwortsignalen für alle Ein- und Ausgänge ausgebildet ist, und
**dass** die Konfigurationseinrichtung weiter dazu ausgebildet ist, zu prüfen, für welche Ein- bzw. Ausgänge Antwortsignale erfassbar sind, und bei positivem Resultat der Prüfung für wenigstens zwei entsprechende Ein- bzw. Ausgänge die damit verbundenen Treiber durch Zuordnen des gleichen Signalkanals zum parallelen Betrieb zu konfigurieren.

## Claims

1. Method for the configuration of a configurable driver module, the driver module comprising at least two drivers (14ᵢ, ..., 14ₙ) for electrical devices (18₁, ..., 18ₙ) which are connected to inputs and/or outputs (16₁, ..., 16ₙ) of the driver module, in relation to at least two electrical devices (18₁, ..., 18ₙ) which are connected to the driver module (10) via the inputs and/or outputs (16₁, ..., 16ₙ), in which
predetermined electrical test signals are applied to the inputs and/or outputs (16₁, ..., 16ₙ),
response signals are sensed which reproduce the responses of the electrical devices (18₁, ..., 18ₙ) to the respective test signals,
data which are determined from the response signals are compared with corresponding predetermined reference data for possible predetermined types of electrical devices (18₁, ..., 18ₙ) for which the driver module (10) is provided to determine predetermined types of the connected electrical devices (18₁, ..., 18ₙ), and, in dependence on the results of the comparison, parameters corresponding to the types determined are set for the driver module (10) and/or for the drivers (14ᵢ, ..., 14ₙ) which are connected to the inputs and/or outputs (16₁, ..., 16ₙ) and/or for the electrical devices (18₁, ..., 18ₙ) which are connected thereto.

2. Method in accordance with claim 1,
**characterized in that**
a driver module (10) with signal channels (22₁, ..., 22ₙ) which are to be assigned to the electrical devices (18₁, ..., 18ₙ) is used, via which signals can be transmitted for the control of the drivers (14ᵢ, ..., 14ₙ) connected to the electrical devices (18₁, ..., 18ₙ) or for the transmission of data signals or measurement signals from or to the electrical devices (18₁, ..., 18ₙ) and/or from or to the drivers (14i, ..., 14ₙ) connected to the latter; and **in that**,
when carrying out the configuration, at least one input or output (16₁, ..., 16ₙ) or one driver (14ᵢ, ..., 14ₙ) of the driver module (10) and thus the corresponding electrical devices (18₁, ..., 18ₙ) and a signal channel (22₁, ..., 22ₙ) are associated with one another.

3. Method in accordance with claim 2,
**characterized in that**
signal channels (22₁, ..., 22ₙ) and respective types of electrical devices (18₁, ..., 18ₙ) are associated with one another; and **in that** this information is stored.

4. Method in accordance with any one of the preceding claims,
**characterized in that**
in each case a current signal and/or a voltage signal is/are used as a response signal which reproduces the current to and/or the voltage at the respective electrical device (18₁, ..., 18ₙ).

5. Method in accordance with claim 4,
**characterized in that**
at least one of the drivers (14ᵢ, ..., 14ₙ) has a MOSFET component (24₁, ..., 24ₙ) with current measurement as a load switch which transmits a current signal in accordance with the load current; and **in that** a voltage signal generated by the current signal at a resistance element (R) is used as the response signal.

6. Method in accordance with any one of the preceding claims,
**characterized in that**
a time dependent course of at least one response signal is sensed after a predetermined initial time point which is preset by the respective test signal; and **in that**
the type of the respective electrical device (18₁, ..., 18ₙ) is established on the basis of at least the time dependent course.

7. Method in accordance with claim 6,
**characterized in that**
individual values of the response signal are sensed at predetermined time points after the initial time point; and **in that**
the individual values of the response signal sensed are compared with corresponding values for a given type of electrical devices (18₁, ..., 18ₙ) which are stored as reference data.

8. Method in accordance with claim 6 or claim 7,
**characterized in that**
values of response signal parameters are determined from the sensed time dependent course of the response signal which at least partly reproduce the time dependent course of the response signal; and **in that**
the comparison of the courses of the response signals with reference signal courses for the electrical reference devices which define the respective types takes place through comparison of the determined values of the response signal parameters with corresponding reference values of the parameters determined for the reference signal plots for the reference devices.

9. Method in accordance with any one of the preceding claims,
**characterized in that**
step function signals are used as test signals.

10. Method in accordance with claim 9,
**characterized in that**
the test signal is generated by switching a corresponding electrical device (18₁, ..., 18ₙ) on or off.

11. Method in accordance with any one of the preceding claims,
**characterized in that**
the test signals are transmitted, the comparisons are carried out and the setting of the parameters is carried out automatically when the driver module (10) is first put into operation.

12. Method in accordance with any one of the preceding claims,
**characterized in that**
a test signal is transmitted via only one input or one output from only one driver; **in that**
for all other inputs and for outputs a test is made whether response signals which are produced by the test signal can be sensed for them; and **in that**
with a positive result of the test for at least two corresponding inputs and/or outputs the drivers which are connected to them are configured for a parallel operation by association of the same signal channel.

13. Configurable driver module having
at least two drivers (14ᵢ, ..., 14ₙ) for electrical devices (18₁, ..., 18ₙ), with the drivers (14ᵢ, ..., 14ₙ) in each case being connected to inputs and/or outputs (16₁, ..., 16ₙ) of the driver module (10),
a memory device (44) in which reference data are stored for identifying predetermined types of electrical devices (18₁, ..., 18ₙ),
a configuration device (48) by means of which at least one test signal transmission device or the drivers (14ᵢ, ..., 14ₙ) can be controlled for the transmission of test signals to the inputs and/or outputs (16₁, ..., 16ₙ), and
at least one sensing device (50) for sensing response signals which reproduce the responses of electrical devices (18₁, ..., 18ₙ), which are connected via the inputs and/or outputs of the drive module, to the respective test signals,
with the configuration device (48) furthermore being designed to compare sensed values and/or the time dependent courses of the response signals with corresponding predetermined reference data for possible types of electrical devices (18₁, ..., 18ₙ) which can be connected to the driver module (10) and, in dependence on the comparison results to determine the types of the connected electrical devices and to set parameters corresponding to the types determined for the driver module (10) and/or for the drivers (14ᵢ, ..., 14ₙ) which are connected to the inputs and/or outputs (16₁, ..., 16ₙ) and/or for the electrical devices (18₁, ..., 18ₙ) which are connected thereto.

14. Driver module in accordance with claim 13,
**characterized in that**
parameters for the corresponding configuration of the driver module (10) and/or of the drivers (14ᵢ, ..., 14ₙ) and/or of the electrical devices which are connected thereto are stored in the memory device (44).

15. Driver module in accordance with claim 13 or claim 14,
**characterized in that**
an interface (20) for at least two signal channels (22₁, ..., 22ₙ) of an external apparatus is provided; and **in that**
the configuration device (48) is designed to assign one of the signal channels (22₁, ..., 22ₙ) to a driver (14ᵢ, ..., 14ₙ).

16. Driver module in accordance with any one of the claims 13 to 15,
**characterized in that**
the configuration device (48) is designed to associate a signal channel (22₁, ..., 22ₙ) and the type of the electrical device (18₁, ..., 18ₙ) which is connected to the corresponding driver (14ᵢ, ..., 14ₙ) with one another; and **in that**
a non-volatile memory (46) is provided in which corresponding data can be stored.

17. Driver module in accordance with any one of the claims 13 to 16,
**characterized in that**
at least two of the drivers (14ᵢ, ..., 14ₙ) are designed and configurable in the same manner.

18. Driver module in accordance with any one of the claims 13 to 17,
**characterized in that**
at least one of the drivers (14ᵢ, ..., 14ₙ) comprises as a load switch a MOSFET component (24ᵢ, ..., 24ₙ) with a current measurement and a current signal output (34) which is associated therewith for transmitting current signals which correspond to the magnitude of the current flowing between load current connections (26, 30) of the MOSFET component (24ᵢ, ..., 24ₙ); **in that**
a resistance element (R) is arranged in a current signal branch (36) which is connected to the current signal output (34) and through which the current signal flows; and **in that**
the sensing device (50) is designed to sense voltages which are present at the resistance element (R) as response signals.

19. Driver module in accordance with any one of the claims 13 to 18,
**characterized in that**
the sensing device (50) is designed for sensing a time dependent course of at least one response signal; and **in that**
the configuration device (48) is designed for determining a type of a respective electrical device (18₁, ..., 18ₙ) on the basis of at least the sensed time dependent course.

20. Driver module in accordance with any one of the claims 13 to 19,
**characterized in that**
the configuration device (48) is designed to control one of the drivers (14ᵢ, ..., 14ₙ) for generating a test signal in such a manner that the latter closes or opens a load circuit.

21. Driver module in accordance with any one of the claims 13 to 20,
**characterized in that**
the configuration device (48) is designed to transmit the test signals, to carry out the comparisons and to carry out the setting of the parameters when the driver module (10) is first put into operation.

22. Driver module in accordance with any one of the claims 13 to 21,
**characterized in that**
the configuration device is designed to control only one driver in such a manner that a test signal is transmitted via only one input or one output;
**in that** the sensing device is designed for the simultaneous sensing of response signals for all inputs and outputs; and
**in that** the configuration device is furthermore designed to test for which inputs and/or outputs response signals can be sensed and, on a positive result of the test, for at least two corresponding inputs and/or outputs, to configure the drivers which are connected thereto for parallel operation by association of the same signal channel.

## Revendications

1. Procédé pour configurer un module de gestion configurable, qui comporte au moins deux gestionnaires (14₁, ..., 14ₙ) pour organes électriques (18₁, ..., 18ₙ) reliés avec des entrées et/ou sorties (16₁, ..., 16ₙ) du module de gestion, en ce qui concerne au moins deux organes électriques (18₁, ..., 18ₙ) raccordés au module de gestion (10) par l'intermédiaire des entrées et / ou sorties (16₁, ..., 16ₙ), dans lequel
des signaux électriques de test prédéfinis sont appliqués aux entrées ou sorties (16₁, ..., 16ₙ),
des signaux de réponse, qui restituent les réponses des organe électriques (18₁, ..., 18ₙ) aux signaux de test respectifs, sont acquis,
des données déterminées à partir des signaux de réponse sont comparées avec des données de référence prédéfinies correspondantes pour des types prédéfinis possibles d'organes électriques (18₁, ..., 18ₙ) pour lesquels est prévu le module de gestion (10), en vue de la détermination de types prédéfinis d'organes électriques raccordés (18₁, ..., 18ₙ),
et des paramètres correspondant aux types déterminés pour le module de gestion (10) et/ ou les gestionnaires (14₁, ..., 14ₙ) reliés avec les entrées ou sorties (16₁, ..., 16ₙ) et/ou les organes électriques raccordés (18₁, ..., 18ₙ) sont fixés en fonction des résultats de comparaison.

2. Procédé selon la revendication 1,
**caractérisé en ce**
**qu'**un module de gestion (10) est utilisé avec des canaux de signalisation (22₁, ..., 22ₙ) à affecter aux organes électriques (18₁, ..., 18ₙ), par l'intermédiaire desquels des signaux destinés à l'activation des gestionnaires (14₁, ..., 14ₙ) reliés avec les organes électriques (18₁, ..., 18ₙ) ou destinés à la transmission de signaux de données ou de mesure peuvent être transmis depuis ou vers les organes électriques (18₁, ..., 18ₙ) et/ou les gestionnaires (14₁, ..., 14ₙ) reliés avec ces derniers, et
en ce que lors de la configuration, au moins une entrée ou sortie (16₁, ..., 16ₙ) ou un gestionnaire (14₁, ..., 14ₙ) du module de gestion (10) et ainsi l'équipement électrique correspondant (18₁, ..., 18ₙ) et un canal de signalisation (22₁, ..., 22ₙ) sont affectés les uns aux autres.

3. Procédé selon la revendication 2,
**caractérisé en ce**
**que** des canaux de signalisation (22₁, ..., 22ₙ) et des types respectifs d'organes électriques (18₁, ..., 18ₙ) sont affectés les uns aux autres et en ce que cette information est mise en mémoire.

4. Procédé selon l'une quelconque des revendications précédentes,
**caractérisé en ce**
**qu'**un signal de courant et/ou un signal de tension, qui restitue le courant ou la tension au niveau de l'organe électrique respectif (18₁, ..., 18ₙ), est respectivement utilisé en tant que signal de réponse.

5. Procédé selon la revendication 4,
**caractérisé en ce**
**qu'**au moins un des gestionnaires (14₁, ..., 14ₙ) présente un composant MOSFET (24₁, ..., 24ₙ) avec mesure du courant en tant que commutateur de charge, ledit composant MOSFET délivrant un signal de courant correspondant au courant de charge et en ce qu'un signal de tension généré par le signal de courant au niveau d'un élément de résistance (R) est utilisé en tant que signal de réponse.

6. Procédé selon l'une quelconque des revendications précédentes,
**caractérisé en ce**
**qu'**une évolution dans le temps d'au moins un signal de réponse est acquise après un instant initial prédéfini par le signal de test respectif, et
en ce que le type d'organes électriques respectifs (18₁, ..., 18ₙ) est déterminé sur la base au moins de l'évolution dans le temps.

7. Procédé selon la revendication 6,
**caractérisé en ce**
**que** des valeurs individuelles du signal de réponse sont acquises aux instants prédéfinis après l'instant initial, et
en ce que les valeurs individuelles acquises du signal de réponse sont comparées avec des valeurs correspondantes mémorisées en tant que données de référence pour un type donné d'organes électriques (18₁, ..., 18ₙ).

8. Procédé selon la revendication 6 ou 7,
**caractérisé en ce**
**que** des valeurs de paramètres de signal de réponse, qui restituent au moins en partie l'évolution dans le temps du signal de réponse, sont déterminées à partir de l'évolution dans le temps acquise du signal de réponse et en ce que la comparaison des évolutions du signal de réponse avec des évolutions de signal de référence pour les organes électriques de référence définissant des types respectifs est effectuée via comparaison des valeurs déterminées des paramètres de signal de réponse avec des valeurs de référence correspondantes des paramètres déterminées pour les évolutions de signal de référence pour les organes de référence.

9. Procédé selon l'une quelconque des revendications précédentes,
**caractérisé en ce**
**que** des sauts de signaux sont utilisés en tant que signaux de test.

10. Procédé selon la revendication 9,
**caractérisé en ce**
**que** le signal de test est généré via mise sous tension ou hors tension d'un organe électrique correspondant (18₁, ..., 18ₙ).

11. Procédé selon l'une quelconque des revendications précédentes,
**caractérisé en ce**
**que** lors de la première mise en service du module de gestion (10), les signaux de test sont automatiquement délivrés, les comparaisons sont exécutées et la fixation des paramètres est effectuée.

12. Procédé selon l'une quelconque des revendications précédentes,
**caractérisé en ce**
**qu'**un signal de test est délivré par un seul gestionnaire par l'intermédiaire d'une seule entrée ou une seule sortie,
en ce que pour toutes les autres entrées ou sorties, il est vérifié si des signaux de réponse appelés par le signal de test peuvent être acquis pour ces dernières, et
en ce qu'en cas de résultat positif du test pour au moins deux entrées ou sorties correspondantes, les gestionnaires ainsi reliés sont configurés pour fonctionner en parallèle via affectation du même canal de signalisation.

13. Module de gestion configurable avec
au moins deux gestionnaires (14₁, ..., 14ₙ) pour des organes électriques (18₁, ..., 18ₙ), les gestionnaires (14₁, ..., 14ₙ) étant respectivement reliés avec des entrées et/ou sorties (16₁,..., 16ₙ) du module de gestion (10),
avec un dispositif de stockage (44), dans lequel sont mémorisées des données de référence en vue de l'identification de types prédéfinis d'organes électriques (18₁, ..., 18ₙ),
avec un dispositif de configuration (48), au moyen duquel au moins un dispositif de délivrance de signal de test ou les gestionnaires (14₁, ..., 14ₙ) peuvent être activés en vue de la délivrance de signaux de test au niveau des entrées et/ou sorties (16₁, ..., 16ₙ) et
avec au moins un dispositif d'acquisition (50) destiné à l'acquisition de signaux de réponse qui restituent les réponses d'organes électriques (18₁, ..., 18ₙ) qui sont raccordés par l'intermédiaire des entrées et/ou sorties du module de gestion, aux signaux de test respectifs,
le dispositif de configuration (58) étant de plus conçu en vue de comparer des valeurs acquises et/ou les évolutions dans le temps des signaux de réponse avec des données de référence correspondantes prédéfinies pour des types possibles d'organes électriques (18₁, ..., 18ₙ) raccordables au module de gestion (10), et en vue de déterminer les types des organes électriques raccordés en fonction des résultats de comparaison et de fixer des paramètres correspondant aux types déterminés pour le module de gestion (10) et/ou les gestionnaires (14₁, ..., 14ₙ) reliés avec les entrées ou sorties (16₁, ..., 16ₙ) et/ou les organes électriques raccordés (18₁, ..., 18ₙ).

14. Module de gestion selon la revendication 13,
**caractérisé en ce**
**que** des paramètres sont mémorisés dans le dispositif de stockage (44) en vue de la configuration correspondante du module de gestion (10) et/ou des gestionnaires (14₁, ..., 14ₙ) et/ou des organes électriques raccordés.

15. Module de gestion selon la revendication 13 ou 14,
**caractérisé en ce**
**qu'**une interface (20) est prévue pour au moins deux canaux de signalisation (22₁, ..., 22ₙ) d'un dispositif externe et en ce que le dispositif de configuration (48) est conçu en vue d'assigner un des canaux de signalisation (22₁, ..., 22ₙ) à un gestionnaire (14₁, ..., 14ₙ).

16. Module de gestion selon l'une quelconque des revendications 13 à 15,
**caractérisé en ce**
**que** le dispositif de configuration (48) est conçu en vue d'affecter un canal de signalisation (22₁, ..., 22ₙ) et le type de l'organe électrique (18₁, ..., 18ₙ) raccordé au gestionnaire correspondant (14₁, ..., 14ₙ) l'un à l'autre, et
en ce qu'une mémoire non volatile (46) est prévue, dans laquelle des données sont mémorisables en conséquence.

17. Module de gestion selon l'une quelconque des revendications 13 à 16,
**caractérisé en ce**
**qu'**au moins deux des gestionnaires (14₁, ..., 14ₙ) sont conçus et configurables de manière identique.

18. Module de gestion selon l'une quelconque des revendications 13 à 17,
**caractérisé en ce**
**qu'**au moins un des gestionnaires (14₁, ..., 14ₙ) comporte un composant MOSFET (24₁, ..., 24ₙ) avec une mesure du courant en tant que commutateur de charge et une sortie du signal de courant (34) reliée avec, en vue de la délivrance de la grandeur du courant des signaux de courant correspondants circulant entre les connexions de courant de charge (26, 30) du composant MOSFET (22₁, ..., 22ₙ), en ce qu'un élément de résistance (R) est disposé dans une branche du signal de courant (36) reliée avec la sortie du signal de courant (34), par laquelle passe le signal de courant, et
en ce que le dispositif d'acquisition (50) est conçu en vue d'acquérir des tensions appliquées au niveau de l'élément de résistance (R) en tant que signaux de réponse.

19. Module de gestion selon l'une quelconque des revendications 13 à 18,
**caractérisé en ce**
**que** le dispositif d'acquisition (50) est conçu en vue de l'acquisition d'une évolution dans le temps d'au moins un signal de réponse et en ce que le dispositif de configuration (48) est conçu en vue de la détermination d'un type d'un organe électrique respectif (18₁, ..., 18ₙ) sur la base au moins de l'évolution dans le temps acquise.

20. Module de gestion selon l'une quelconque des revendications 13 à 19,
**caractérisé en ce**
**que** le dispositif de configuration (48) est conçu en vue d'activer un des gestionnaires (22₁, ..., 22ₙ) en vue de la génération d'un signal de test, de telle manière que ledit gestionnaire ouvre ou ferme un circuit de courant de charge.

21. Module de gestion selon l'une quelconque des revendications 13 à 20,
**caractérisé en ce**
**que** le dispositif de configuration (48) est conçu en vue de délivrer les signaux de test lors de la première mise en service du module de gestion (10), de procéder aux comparaisons et d'effectuer la fixation des paramètres.

22. Module de gestion selon l'une quelconque des revendications 13 à 21,
**caractérisé en ce**
**que** le dispositif de configuration est conçu en vue d'activer un seul gestionnaire, de telle manière qu'un signal de test est délivré par l'intermédiaire d'une seule entrée ou d'une seule sortie,
en ce que le dispositif d'acquisition est conçu en vue de l'acquisition simultanée de signaux de réponse pour toutes les entrées et sorties,
et en ce que le dispositif de configuration est de plus conçu en vue de vérifier pour quelles entrées ou sorties des signaux de réponse peuvent être acquis et, en cas de résultat positif du test pour au moins deux entrées ou sorties correspondantes, afin de configurer les gestionnaires ainsi reliés via affectation du même canal de signalisation en vue du fonctionnement en parallèle.
